# EUROPÄISCHE PATENTANMELDUNG

(11) **EP 2 157 559 A2**
(43) Veröffentlichungstag der Anmeldung: **24.02.2010**
(21) Anmeldenummer: 09100264.2
(22) Anmeldetag: 30.04.2009
(51) Int. Cl.: G08G 1/0968, G08G 1/0969

(54) **Fahrerinformationssystem und Verfahren hierfür**

(30) Priorität: 30.06.2008 DE 102008040030
(71) Anmelder: ROBERT BOSCH GMBH, 70442 Stuttgart (DE)
(72) Erfinder: Rychlak, Stefan, 31241, Ilsede (DE)

(57) **Zusammenfassung**

Die Erfindung betrifft ein Fahrerinformationssystem (1) und ein Verfahren hierfür, wie insbesondere ein Navigationssystem, bei welchem Kartendaten einer Karte (10) zur Steuerung und/oder zur Routenberechnung und/oder zur Zielführung verwendet werden, wobei die Kartendaten Daten von ausgewählten Zonen enthalten, welche spezifische Eigenschaften hinsichtlich ihrer Durchfahrt aufweisen.

## Beschreibung

### Technisches Gebiet

Die Erfindung betrifft ein Fahrerinformationssystem, wie insbesondere ein Navigationssystem, bei welchem Kartendaten zur Steuerung und/oder zur Routenberechnung und/oder zur Zielführung herangezogen werden, insbesondere nach dem Oberbegriff von Anspruch 1, sowie ein Verfahren hierfür.

### Stand der Technik

Fahrerinformationssysteme oder Navigationssysteme sind im Stand der Technik bekannt. Sie dienen der Routenberechnung und/oder Zielführung beispielsweise eines Fahrzeugs anhand zuvor eingegebener Zieldaten durch optische und/oder akustische Anweisungen an den Fahrer, wobei darüber hinaus auch weitere Informationen beispielsweise auf einem Bildschirm dargestellt werden können. So können Punkte des Interesses (POI), wie beispielsweise Hotels, Restaurants etc. auf einer Karte auf dem Bildschirm angezeigt werden. Auch können Verkehrsschilder und Geschwindigkeitsbegrenzungen auf der vorliegend befahrenen Straße oder auf angezeigten Straßen angegeben werden.

In Deutschland sind in der Vergangenheit sogenannte Umweltzonen definiert worden, in welchen Fahrzeuge verschiedener Kategorie Durchfahrrechte oder auch keine Durchfahrrechte genießen, je nach einem zuvor definierten Umweltverträglichkeitsmaß des Fahrzeugs. Im vorliegenden Falle wird derzeit die jeweilige Umweltzone räumlich definiert und die Fahrzeuge erhalten je nach Grad der Feinstaubemission eine zugeordnete Einstufung, die mit einer Plakette mit einer zugehörigen Farbe signalisiert wird. Über die Zuordnung einer solchen Plakette mit einer farblich gekennzeichneten Einstufung wird dem Fahrzeug ein ggfs. zeitlich beschränktes Durchfahrrecht durch eine Umweltzone zugeordnet oder auch nicht. Fahrzeuge ohne entsprechende Durchfahrrechte dürfen solche sogenannten Umweltzonen nicht befahren ohne ein Bußgeld zu riskieren.

Dies bringt die Problematik mit sich, dass einer ggf. vorgenommene Routenauswahl zur Zielführung bei einem Fahrzeug ohne Durchfahrerlaubnis nicht gefolgt werden kann, weil das Fahrzeug ansonsten durch die sogenannte Umweltzone geführt werden würde, obwohl ein Durchfahrrecht nicht vorliegt.

### Darstellung der Erfindung: Aufgabe, Lösung, Vorteile

Es ist die Aufgabe der Erfindung, ein Fahrerinformationssystem, wie insbesondere ein Navigationssystem, und ein Verfahren hierfür zu schaffen, bei welchem Kartendaten zur Steuerung und/oder zur Routenberechnung und/oder zur Zielführung verwendet werden, wobei oben geschilderte Konflikte vermieden werden sollen und/oder der Stand der Technik verbessert werden soll.

Dies wird erreicht für das Fahrerinformationssystem mit den Merkmalen von Anspruch 1, wonach bei einem Fahrerinformationssystem, wie insbesondere bei einem Navigationssystem, bei welchem Kartendaten zur Steuerung und/oder zur Routenberechnung und/oder zur Zielführung verwendet werden, die Kartendaten Daten von ausgewählten Zonen enthalten, welche spezifische Eigenschaften hinsichtlich ihrer Durchfahrung aufweisen, nämlich z.B. spezifische Durchfahrungserlaubnisrechte erfordern. Dadurch wird vorteilhaft die Existenz spezieller Zonen und/oder auch der sogenannten in Deutschland definierten Umweltzonen insbesondere unter Berücksichtigung von einer diesbezüglichen Durchfahrerlaubnis des benutzten Fahrzeuges bei der Steuerung des Fahrzeuges und/oder zur Routenberechnung und/oder zur Zielführung berücksichtigt.

In vorteilhafter Weise wird zumindest einer Zone zumindest ein Kriterium, vorteilhaft auch mehrere verschiedene Kriterien für ihre Durchfahrung zugeordnet, die in ihren Daten abgelegt sind. Beispielsweise kann einer solchen Zone neben ihrer geografischen Begrenzung auch zugeordnet werden, welche Fahrzeuge oder Fahrzeugtypen wann oder bis wann die Zone durchfahren dürfen. In Deutschland unterscheidet man derzeit zwischen Personenkraftfahrzeugen (PKW) ohne sogenannte Durchfahrerlaubnis, also ohne Plakette und Fahrzeuge mit einer roten Plakette mit Durchfahrerlaubnis bis zu einem spezifischen ersten Zeitpunkt, Fahrzeuge mit einer gelben Plakette mit Durchfahrerlaubnis bis zu einem spezifischen zweiten Zeitpunkt und Fahrzeuge mit einer grünen Plakette mit Durchfahrerlaubnis bis zu einem spezifischen dritten Zeitpunkt, wobei dieser Zeitpunkt derzeit zumindest noch nicht begrenzt ist.

So kann das Fahrerinformationssystem vorteilhaft abfragen, ob eine solche Durchfahrerlaubnis vorliegt und welchen Typs diese ist, also welche Plakette vorhanden ist und somit bis wann die Durchfahrerlaubnis besteht. Entsprechend kann eine Steuerung des Fahrzeugs, eine Routenführung oder Routenauswahl erfolgen.

Dabei ist es also vorteilhaft, wenn eine Zone eine sogenannte Umweltzone ist, in welcher lediglich Fahrzeuge durchfahrberechtigt sind, die eine entsprechende Erlaubnis haben. Es kann aber auch eine anderweitig definierte Zone sein, wie beispielsweise eine City-Maut Zone, in welchen eine Gebühr zur Ein- bzw. Durchfahrt zu entrichten wäre.

Auch ist es vorteilhaft, wenn die zumindest eine Zone auf einem Bildschirm beispielsweise des Fahrerinformationssystems darstellbar ist und/oder dass durch das Fahrerinformationssystem abfragbar ist, ob eine Durchfahrberechtigung der zumindest einen Zone vorliegt.

Das vorteilhafte erfindungsgemäße Fahrerinformationssystem wird vorteilhaft bei Nichtvorliegen einer Durchfahrberechtigung Routenvorschläge und/oder Zielführungen unter Umgehung der Zone vorgeschlagen und/oder durchführen, so dass die entsprechende Zone gemieden wird.

Gemäß eines weiteren erfindungsgemäßen Gedankens ist es besonders vorteilhaft, wenn beim Eintritt oder beim Befahren einer solchen Zone ein Signal an eine Steuerung, beispielsweise Motorsteuerung, des Fahrzeugs gesendet wird, woraufhin eine Änderung zumindest einer Einstellung für die Steuerung durchgeführt wird.

Dadurch kann vorteilhaft erreichet werden, dass die Änderung der Einstellung zu einer Ansteuerung einer reduzierten Motorleistung des Fahrzeugantriebsmotors führt.

Auch kann erreicht werden, dass eine verlängerte Motorabschaltzeit bei einem Start-Stopp-Betrieb durch eine frühere Motorabschaltung angesteuert wird.

Dies führt vorzugsweise zu einer reduzierten Emission, was in einer sogenannten Umweltzone auch bei Vorliegen einer Durchfahrerlaubnis erwünscht wäre.

Hinsichtlich des Verfahrens wird die erfindungsgemäße Aufgabe erreicht mit den Merkmalen von Anspruch 9.

Weitere erfindungsgemäße Vorteile werden durch die Unteransprüche beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer erfindungsgemäßen Fahrerinformationssystems,
- Fig. 2: einen Ausschnitt einer Karte mit Straßen, in welcher eine spezifische Zone dargestellt ist, und
- Fig. 3: einen schematischen Ablauf eines erfindungsgemäßen Verfahrens.

### Bevorzugte Ausführung der Erfindung

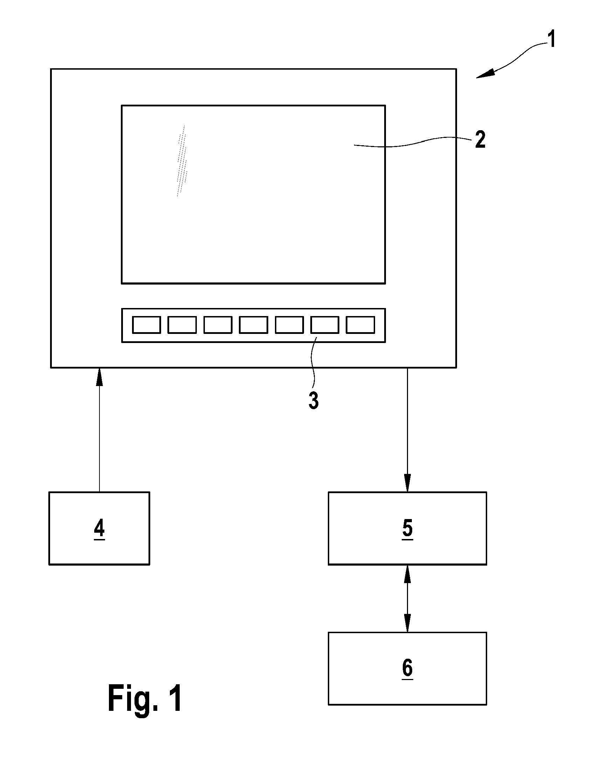

Die Figur 1 zeigt schematisch ein Fahrerinformationssystem 1, welches vorzugsweise einen Bildschirm 2 zur optischen Anzeige von Daten und/oder Informationen aufweist. Ein solches Fahrerinformationssystem kann vorzugsweise in einem Fahrzeug vorgesehen und installiert sein oder es kann als mobiles Gerät in einem Fahrzeug betrieben werden. Der Bildschirm 2 dient vorzugsweise zur Darstellung von Kartendaten zur Routenanzeige und/oder zur Routenzielführung, sowie zur Darstellung von Anweisungen zur Routenzielführung und zur Anzeige von sonstigen Daten oder Informationen, wie beispielsweise Punkte des Interesses (POI), Verkehrsregelungen etc. Als Bildschirm 2 wird eine Anzeige im weitesten Sinne verstanden zur Anzeige von Informationen. Vorteilhaft könnte auch ein Bildschirm 2 eines anderen Geräts beispielsweise in einem Fahrzeug verwendet werden, wenn kein eigener Bildschirm des Fahrerinformationssystems vorgesehen ist. Auch kann eine akustische Signalisierung zusätzlich oder als Ersatz zu der optischen Signalisierung erfolgen.

Weiterhin sind Eingabemittel 3 vorgesehen, mittels welchen unter vorteilhafter Zuhilfenahme eines Bedienungsmenüs das Fahrerinformationssystem 1 bedient werden kann. Damit kann also ein Ziel eingegeben werden oder eine Aktion, wie beispielsweise eine Zielführung gestartet werden. Auch kann damit eingegeben werden, ob eine Durchfahrerlaubnis oder -berechtigung für eine spezifische Zone vorliegt.

Darüber hinaus verfügt das Fahrerinformationssystem 1 über einen Speicher 4, in welchem vorzugsweise Kartendaten gespeichert sind. Diese Kartendaten können auf einer CD-Rom, einer DVD oder einem anderen optischen Speichermedium gespeichert sein. Der Speicher 4 kann aber auch eine Festplatte, ein Festspeichermedium oder eine Chipkarte sein. Über den Speicher 4 werden Kartendaten an den Prozessor des Fahrerinformationssystems weitergeleitet und verarbeitet.

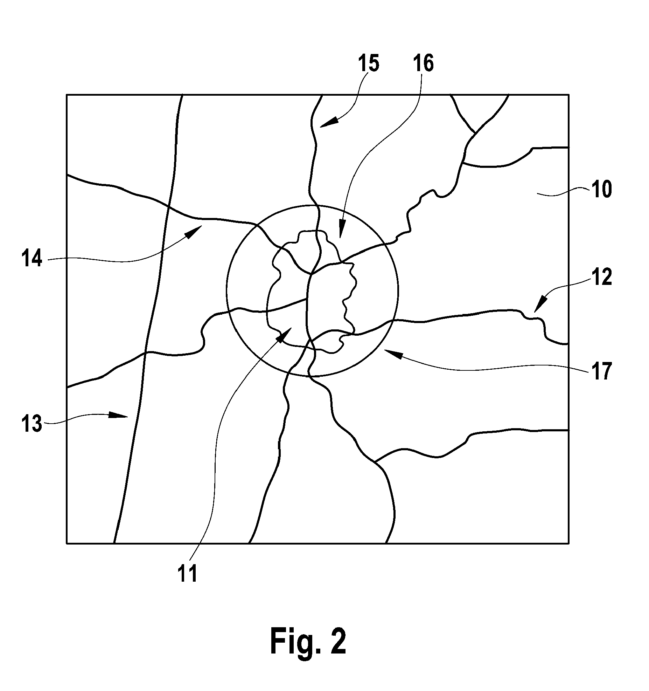

Die Kartendaten in dem Speicher 4 können nun beispielsweise wie in Figur 2 dargestellt aufgebaut sein. Die Figur 2 zeigt einen Ausschnitt von Kartendaten 10, wie er beispielsweise für eine Umgebung einer Stadt 11 in der Praxis auftreten kann. Die Karte 10 zeigt die Stadt 11 und verschiedene Straßen 12,13,14 und 15, die in dem ausgewählten Kartenausschnitt bei der angegebenen Vergrößerung dargestellt sind. Neben der Stadt 11 und den Straßen 12 bis 15 ist eine Zone 16 zu erkennen. Diese Zone ist durch die Begrenzung 17 der Zone definiert. Diese Zone ist vorzugsweise eine Zone mit gegebenen Durchfahrberechtigungen oder mit einer für die Durchfahrt fälligen Gebühr. Beispielsweise ist die Zone eine sogenannte Umweltzone, wie sie in Deutschland eingeführt werden bzw. wurden. Eine solche Umweltzone ist nur für solche Fahrzeuge durchfahrbar bzw. gleichbedeutend mit befahrbar, wenn das Fahrzeug die dazu notwendige Berechtigung besitzt. Eine solche Berechtigung kann beispielsweise dann vorliegen, wenn das Fahrzeug einen geringen Ausstoß an Feinstaub aufweist. Liegt der Ausstoß über einem vorgegebenen Grenzwert oder ist das Fahrzeug als solches eingestuft, so kann die Durchfahrerlaubnis ab einem vorgegebenen Zeitpunkt zukünftig entfallen oder bereits mit Einführung der Umweltzone bereits nicht vorliegen.

Grundsätzlich können die Kartendaten, welche eine solche Zone signalisieren oder umfassen, auch per Datenübertragung zur verfügung gestellt werden. Dazu kann ein Datensatz auch per Funk oder WLAN übertragen werden. Es kann auch eine Übertragung per Galileo etc. erfolgen.

Liegt beispielsweise keine Durchfahrberechtigung vor, so kann dies in dem Fahrerinformationssystem 1 eingegeben werden. Dazu kann das Fahrerinformationssystem 1 eine Abfrage initiieren, wonach die beispielsweise mit einer Plakette versehene Durchfahrerlaubnis erfragt wird. Vorteilhaft kann eine solche Abfrage eines Vorliegens einer Durchfahrerlaubnis, wie Plakette, bei einem Ausführungsbeispiel der Erfindung nur einmal erfolgen, damit kein Missbrauch durch mehrfaches Eingeben einer alternativen Art der Erlaubnis erfolgen kann. Eine zweite Eingabe würde verweigert werden oder nur nach vorheriger spezieller Autorisierung erfolgen können. Liegt eine Durchfahrberechtigung vor, kann die zuvor bestimmte Route zum Ziel auch durch die Zone führen. Anderenfalls müsste eine Ausweichroute bestimmt werden, die nicht durch die Zone führt, sondern an ihr vorbei führt.

Für den Fall, dass das Ziel in der Zone liegt, könnten verschiedene Lösungen umgesetzt werden.

Als erste Lösung kann der schnellste Weg zu einem Punkt der Karte nahe zur Grenze der Zone hin angestrebt werden. Auch könnte als Alternative ein Punkt der Karte mit Anschluss an einen öffentlichen Personennahverkehr angestrebt werden. Weiterhin könnte beispielsweise unter explizitem Hinweis auf das Befahren der Zone dennoch das Ziel angestrebt werden, obwohl das Fahrzeug nicht durchfahrberechtigt ist.

Weiterhin kann das Fahrerinformationssystem 1 dazu dienen bei Befahrung einer solchen Zone in Kommunikation mit einem Steuergerät 6 zu treten und dem Steuergerät 6 die Befahrung einer solchen Zone zu signalisieren, so dass das Steuergerät 6 einen Betriebszustand ansteuert, welcher beispielsweise einen reduzierten Verbrauch und somit auch ein reduziertes Maß an Abgasen und/oder Feinstaubpartikeln verursacht. Dazu weist das Fahrerinformationssystem 1 eine Signalerzeugungseinheit 5 auf, welche ein Signal erzeugt, das an die Steuereinheit 6 weitergeleitet wird, damit signalisiert wird, dass eine solche Zone befahren wird.

Das erfindungsgemäße Fahrerinformationssystem 1 wird vorzugsweise für Fahrzeuge verwendet, wobei es beispielsweise fest in ein Fahrzeug beispielsweise im Bereich des Armaturenbretts oder der Mittelkonsole eingebaut werden kann. Dabei werden Kartendaten einer Karte 10 zur Steuerung und/oder zur Routenberechnung und/oder zur Zielführung verwendet, die beispielsweise in einem Kartendatenspeicher 4 vorliegen. Erfindungsgemäß werden umfassen die Kartendaten auch Daten von ausgewählten Zonen, welchen spezifische Eigenschaften hinsichtlich ihrer Durchfahrung aufweisen. Solche Zonen können beispielsweise sogenannte Umweltzonen sein oder auch anderweitig definierte Zonen mit definierter Durchfahrtsberechtigung.

Erfindungsgemäß wird einer solchen Zone vorzugsweise zumindest ein Kriterium oder auch mehrere verschiedene Kriterien für ihre Durchfahrung zugeordnet, die vorteilhaft in den Daten der Karte abgelegt sind. Dadurch kann abgefragt werden, ob ein notwendiges Kriterium zur Berechtigung der Durchfahrt der Zone vorliegend erfüllt ist und anhand der gegebenen Antwort kann eine entsprechende Steuerung der Routenauswahl und/oder der Zielführung durchgeführt werden.

Dabei ist es besonders vorteilhaft, wenn das erfindungsgemäße Verfahren durchgeführt wird, wenn die Zone eine sogenannte Umweltzone ist, in welcher lediglich Fahrzeuge durchfahrberechtigt sind, die eine entsprechende Erlaubnis oder Zulassung haben.

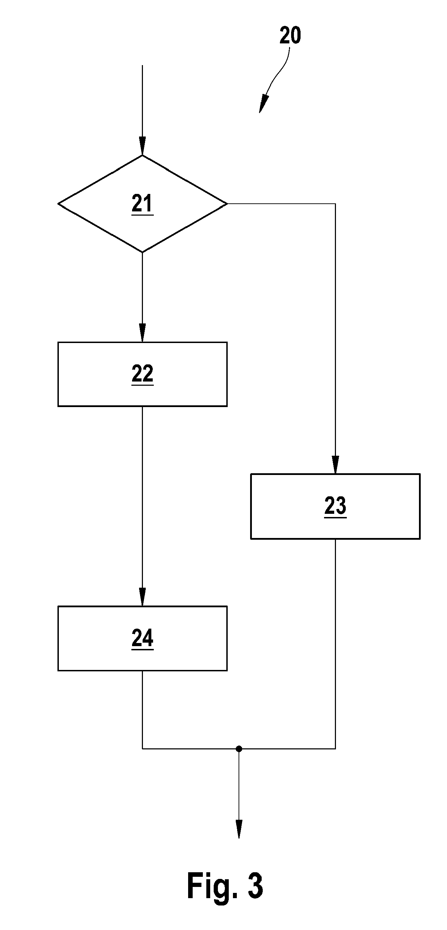

Gemäß Figur 3 kann das Verfahren 20 vorteilhaft derart durchgeführt werden, dass in Block 21 abgefragt wird, ob eine Berechtigung zur Durchfahrt vorliegt und wenn ja, wird eine Routenauswahl und/oder Zielführung 22 gestartet, die die Durchfahrt der Zone nicht umgeht. Wenn die Abfrage 21 verneint wird, so wird in Block 23 eine Routenauswahl und/oder Zielführung gestartet, die die Durchfahrt der Zone umgeht.

In Block 24 kann weiterhin eine Steuerung erfolgen, bei welcher bei Einfahrt in die Zone eine veränderte Steuerung durch beispielsweise die Motorsteuerung initiiert wird, wodurch eine Reduzierung des Ausstoßes des Fahrzeuges zumindest kurzfristig herbei geführt wird. Dies kann dadurch erfolgen, dass die Änderung der Einstellung zu einer Ansteuerung einer reduzierten Motorleistung des Fahrzeugantriebsmotors führt. Auch kann es herbeigeführt werden, wenn eine verlängerte Motorabschaltzeit bei einem Start-Stopp-Betrieb durch eine frühere bzw. schnellere Motorabschaltung angesteuert wird.

Bei der Übertragung und dem Empfang von Kartendaten einer solchen Zone kann es weiterhin vorteilhaft sein, wenn damit auch eine veränderte Ansteuerung des Antriebs des Fahrzeugs initiiert wird oder erfolgt. Dadurch kann beispielsweise auch auf ein früheres oder instantanes Umschalten von einem Verbrennungsmotor auf einen Elektroantrieb oder einen sonstigen umweltfreundlichen Antrieb, wie beispielsweise bei einem sogenannten Hybridfahrzeug, angesteuert werden.

Die Abfrage gemäß Block 21 kann derart erfolgen, dass die zumindest eine Zone auf dem Bildschirm 2 darstellbar ist und/oder dass durch das Fahrerinformationssystem 1 abfragbar ist, ob eine Durchfahrberechtigung der zumindest einen Zone vorliegt. Anschließend kann durch die Bedienelemente 3 eingegeben werden, ob die Berechtigung vorliegt oder nicht.

## Patentansprüche

1. Fahrerinformationssystem (1), wie insbesondere ein Navigationssystem, bei welchem Kartendaten zur Steuerung und/oder zur Routenberechnung und/oder zur Zielführung verwendet werden, **dadurch gekennzeichnet, dass** die Kartendaten Daten von ausgewählten Zonen (16) enthalten, welche spezifische Eigenschaften hinsichtlich ihrer Durchfahrung aufweisen.

2. Fahrerinformationssystem nach Anspruch 1, **dadurch gekennzeichnet, dass** einer Zone (16) zumindest ein Kriterium oder Kriterien für ihre Durchfahrt zugeordnet werden, die in ihren Daten abgelegt sind.

3. Fahrerinformationssystem nach Anspruch 1 oder 2, **dadurch gekennzeichnet, dass** eine Zone (16) eine sogenannte Umweltzone ist, in welcher lediglich Fahrzeuge durchfahrberechtigt sind, die eine entsprechende Erlaubnis haben.

4. Fahrerinformationssystem nach Anspruch 3, **dadurch gekennzeichnet, dass** zumindest eine Zone (16) auf dem Bildschirm (2) darstellbar ist und/oder dass durch das Fahrerinformationssystem (1) abfragbar ist, ob eine Durchfahrberechtigung der zumindest einen Zone (16) vorliegt.

5. Fahrerinformationssystem nach einem der vorhergehenden Ansprüche, **dadurch gekennzeichnet, dass** bei Nichtvorliegen einer Durchfahrberechtigung die Zone (16) gemieden wird und Routenvorschläge und/oder Zielführungen unter Umgehung der Zone (16) vorgeschlagen und/oder durchgeführt wird.

6. Fahrerinformationssystem nach einem der vorhergehenden Ansprüche, **dadurch gekennzeichnet, dass** beim Eintritt oder Befahren einer Zone (16) ein Signal an eine Steuerung, wie Motorsteuerung, des Fahrzeugs gesendet wird, woraufhin eine Änderung einer Einstellung für die Steuerung durchgeführt wird.

7. Fahrerinformationssystem nach Anspruch 6, **dadurch gekennzeichnet, dass** die Änderung der Einstellung zu einer Ansteuerung einer reduzierten Motorleistung des Fahrzeugantriebsmotors führt.

8. Fahrerinformationssystem nach einem der vorhergehenden Ansprüche, **dadurch gekennzeichnet, dass** eine verlängerte Motorabschaltzeit bei einem Start-Stopp-Betrieb durch eine frühere Motorabschaltung angesteuert wird.

9. Verfahren zum Betreiben eines Fahrerinformationssystems (1), wie insbesondere eines Navigationssystem, bei welchem Kartendaten zur Steuerung und/oder zur Routenberechnung und/oder zur Zielführung verwendet werden, **dadurch gekennzeichnet, dass** die Kartendaten Daten von ausgewählten Zonen (16) enthalten, welche spezifische Eigenschaften hinsichtlich ihrer Durchfahrt aufweisen.

10. Verfahren nach Anspruch 9, **dadurch gekennzeichnet, dass** einer Zone (16) verschiedene Kriterien für ihre Durchfahrt zugeordnet werden, die in ihren Daten abgelegt sind.

11. Verfahren nach Anspruch 9 oder 10, **dadurch gekennzeichnet, dass** eine Zone (16) eine sogenannte Umweltzone ist, in welcher lediglich Fahrzeuge durchfahrberechtigt sind, die eine entsprechende Erlaubnis haben.

12. Verfahren nach Anspruch 11, **dadurch gekennzeichnet, dass** zumindest eine Zone (16) auf dem Bildschirm (2) darstellbar ist und/oder dass durch das Fahrerinformationssystem (1) abfragbar ist, ob eine Durchfahrberechtigung der zumindest einen Zone (16) vorliegt.

13. Verfahren nach einem der vorhergehenden Ansprüche 9 bis 12, **dadurch gekennzeichnet, dass** bei Nichtvorliegen einer Durchfahrberechtigung die Zone (16) gemieden wird und Routenvorschläge und/oder Zielführungen unter Umgehung der Zone (16) vorgeschlagen und/oder durchgeführt wird.

14. Verfahren nach einem der vorhergehenden Ansprüche 9 bis 13, **dadurch gekennzeichnet, dass** beim Eintritt oder Befahren einer Zone (16) ein Signal an eine Steuerung des Fahrzeugs gesendet wird, woraufhin eine Änderung einer Einstellung für die Steuerung durchgeführt wird.

15. Verfahren nach Anspruch 14, **dadurch gekennzeichnet, dass** die Änderung der Einstellung zu einer Ansteuerung einer reduzierten Motorleistung des Fahrzeugantriebsmotors führt und /oder dass eine verlängerte Motorabschaltzeit bei einem Start-Stopp-Betrieb durch eine frühere Motorabschaltung angesteuert wird.
